(19) Europäisches Patentamt
European Patent Office
Office européen des brevets

(11) Veröffentlichungsnummer: **0 144 702**
**B1**

(12) # EUROPÄISCHE PATENTSCHRIFT

(45) Veröffentlichungstag der Patentschrift: **13.06.90**

(51) Int. Cl.⁵: **C 08 G 65/38**, C 08 G 65/44, C 08 G 81/00

(21) Anmeldenummer: **84113001.6**

(22) Anmeldetag: **29.10.84**

(54) **Verfahren zur Herstellung von bifunktionnellen Polyphenylenoxiden.**

(30) Priorität: **09.11.83 DE 3340493**

(43) Veröffentlichungstag der Anmeldung:
**19.06.85 Patentblatt 85/25**

(45) Bekanntmachung des Hinweises auf die Patenterteilung:
**13.06.90 Patentblatt 90/24**

(84) Benannte Vertragsstaaten:
**DE FR GB IT**

(56) Entgegenhaltungen:
**Chemical Abstracts, Band 77, Nr. 4, 24. Juli 1972, Seite 27, Nr. 20346k, Columbus, Ohio, ( US ).**
**Chemical Abstracts, Band 82, Nr. 4, 27. Januar 1975, Seite 52, Nr. 17798g, Columbus, Ohio, (US)**

**Die Akte enthält technische Angaben, die nach dem Eingang der Anmeldung eingereicht wurden und die nicht in dieser Patentschrift enthalten sind.**

(73) Patentinhaber: **BAYER AG**
**D-5090 Leverkusen 1 Bayerwerk (DE)**

(72) Erfinder: **Heitz, Walter, Prof. Dr.**
**Am Schmidtborn 5**
**D-3575 Kirchhain (DE)**
Erfinder: **Risse, Wilhelm**
**Weidenhäuserstrasse 72**
**D-3550 Marburg (DE)**

**EP 0 144 702 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft ein neues Verfahren zur Herstellung von bifunktionellen Polyphenylenoxiden.

Verschiedene Verfahren zur Herstellung von Polyphenylenethern (Polyphenylenoxiden) sind bekannt.

Die Bildung von Polyphenylenethern durch die Oxidation von Dialkylphenolen wird z.B. in NL—PS 65 04 925, NL—PS 66 10 017, Fr—PS 15 44 942, Fr—PS 15 23 821, US—PS 33 13 776, US—PS 33 06 879, US—PS 34 32 469, US—PS 39 14 266, US—PS 39 56 442, US—PS 39 65 069 beschrieben.

Nach NL—PS 64 13 958 werden Polyphenylenether mit NaOH oder KOH zu mehrfunktionellen Polyphenylenethern umgesetzt.

Die DE PS 28 22 856 beschreibt die Herstellung von Polyphenylenoxiden mit zwei Hydroxylengruppen. Bei diesem Verfahren erhalten Polyphenylenoxide, die maximal eine Hydroxylgruppe besitzen, durch den Einbau von Chinonen eine weitere Hydroxylgruppe.

Des weiteren ist die Herstellung von Polyphenylenethern aus halogensubstituierten Phenolen bekannt. Durch Phasengrezflächenpolymerisation in Gegenwart von Oxidationsmitteln werden 4-Halogen-2,6-disubstituierte Phenole polymerisiert. (J. Polymer Sic. *61*, 135 (1962); J. Polymer Sci. *49*, 267 (1961); J. Polymer Sci. *A3*, 2009 (1965); J. Polymer Sci. *B4*, 436 (1966); US PS 32 19 698, US PS 32 36 807, US PS 32 57 357, US PS 33 42 892, US PS 33 82 212).

Bei diesen Herstellungsverfahren ist das halogensubstituierte Phenol in einem organischen Lösungsmittel und die Base, KOH oder NaOH, in der wäßrigen Phase. Als Oxidationsmittel werden z.B. $PbO_2$, $K_3Fe(CN)_6$, Benzoylperoxid, $Pb(OAc)_4$, anorganische Peroxide, $J_2$ oder 2,4,6-Tri-tert.-butylphenoxy-Radikale eingesetzt.

Die Polymerisation von halogensubstituierten Phenolen in homogener Phase unter Verwendung äquimolar Mengen Cu- und Amin-Katalysatoren beschreiben z.B. J. Polymer Sci. *58*, 469 (1962), USSR—PS 231 814.

Katalysatoren, die in der Lage sind, Phenole mit einer Hydroxylgruppe, z.B. auch halogensubstituierte Phenole, zu polymerisieren, werden in den JP—PS 69 28 511, 70 21 311, 70 30 335 und DE—OS 20 61 116 beschrieben.

Dagegen ist die Copolymerisation von halogensubstituierten Phenolen mit Bisphenolen bisher noch nicht beschrieben worden.

Die vorliegende Erfindung betrifft ein Verfahren zur Herstellung von Polyphenylenethern (Polyphenylenoxiden) mit zwei Hydroxylgruppen entsprechend der Formel I

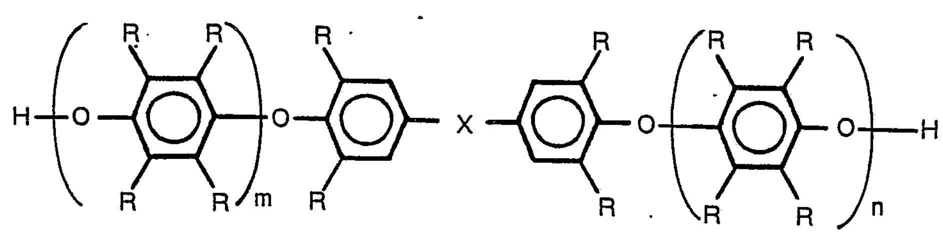

(I),

in welcher

R gleich oder verschieden ist und für Wasserstoff, einen Alkylrest mit 1 bis 4 C-Atomen, vorzugsweise Wasserstoff oder Methyl-, einen Alkoxyrest mit 1 bis 4 C-Atomen, vorzugweise Methoxy- oder einen Arylrest mit 6 C-Atomen,

X für eine Gruppe $^1$—C—R$^1$,

in der R$^1$ für Wasserstoff oder einen Alkylrest mit 1 bis 4 C-Atomen, —O—, —N— R$^1$ oder —$SO_2$— steht und

m und n für eine ganze Zahl von 1 bis 200, vorzugsweise von 5 bis 60 stehen,

das dadurch gekennzeichnet ist, daß ein Gemisch der Phenole der Formeln II und III

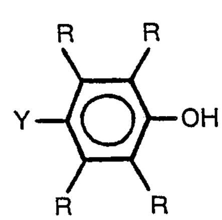

(II),

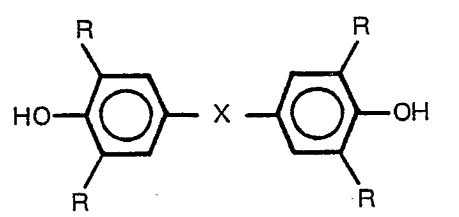

(III),

in welcher

X und R die bei Formel I angegebene Bedeutung haben und
Y für Cl, Br oder I steht, miteinander umgesetzt werden.

In einer besonderen Ausfürungsform des erfindungsgemäßen Verfahrens können Homopolymerisate von Phenolen der Formel II mit Homopolymerisation von Phenolen der Formel III umgesetzt werden.

Die Umsetzung erfolgt in Gegenwart eines Oxidationsmittels und einer Base bei einer Temperatur von −80°C bis 150°C. Sie kann in einem organischen Lösungsmittel oder in einem Zweiphasensystem, bei dem eine Phase ein organisches Lösungsmittel und die andere Phase Wasser ist, durchgeführt werden.

Als organische Lösungmittel können z.B. Aromaten wie Benzol, Toluol, Ethylbenzol, Nitrobenzol, Chlorbenzol, Pyridin und halogenierte Kohlenwasserstoffe, z.B. Aliphaten wie Chloroform, Tetrachlorkohlenstoff, Dichlorethan, Trichlorethan, Tetrachlorethan, Trichlorethylen, und Tetrachlorethylen eingesetzt werden.

Als Oxidationsmittel können z.B. elementares Jod ($J_2$), $PbO_2$, $K_3Fe(CN)_6$, $Pb(OAc)_4$, anorganische Persulfate, z.B. $(NH_4)_2S_2O_8$ oder Metallverbindungen, z.B. Halogenide, Sulfate, Carboxylate und Oxide von Elementen der 1., 7. und 8. Nebengruppe des Periodsystems nach Mendelejeff (Hofmann, Rüdorff, Anorganische Chemie, 19. Auflage S. 97, Vieweg Verlag 1966) wie CuCl, CuBr, $Cu_2SO_4$, $CuCl_2$, $CuBr_2$, $MnCl_2$, $Ag_2O$, Cu(II)-acetat, Cu(II)-formiat, $Cu(NO_3)_2$, $Cu_2A_2B_2(OR)_2$ (A = Amin, B = Cl oder Br, R = Wasserstoff oder Methyl), Biscyclopentadienylmangan, Mn (II)-acetat, $Mn(NO_3)_2$, $Mn(OH)_2$ oder Kobaltchelat-Komplexe, z.B.

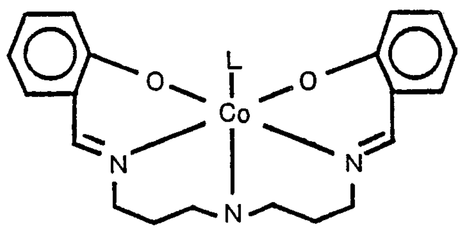

L = $H_2O$, Pyridin

in Verbindung mit Choriden, Carboxylaten oder Acetylacetonaten der VIII. Nerbengruppe des Periodensystems nach Mendelejeff (z.B. $NiCl_2.6H_2O$; $CoCl_2.6H_2O$, $FeCl_2$, Co(II)-acetat, Nickel(II)-acetat, Nickel(II)-acetylacetonat) oder Mischungen von $Cu(NO_3)_2$ mit $PdCl_2$, $Pd(OAc)_2$, $RuCl_3$, $RhCl_3$ verwendet werden.

Die Metallverbindungen können gegebenenfalls durch Reaktion mit molekularem Sauerstoff in die für die Oxidation geeignete Oxidationsstufe gebracht werden. Die Oxidationsmittel können einzeln oder im Gemisch verwendet werden.

Als Basen können Amine wie Pyridin, Methylpyridine, 4-Dimethylaminopyridin, Poly-4-vinylpyridin, Piperidin, Morpholin, Triethanolamin, sowie offenkettige aliphatische Amine wie n-Butylamin, Octylamin, Dibutylamin, N,N-Dimethyl-n-hexylamin, Triethylamin, N,N′-Di-tert.-butylethylendiamin, N,N,N′,N′-Tetramethylethylendiamin, N,N,N′,N′-Tetramethylpropylendiamin, N,N,N′,N′-Tetramethyl-1,3-diaminobutan, 2-Aminoethanthiol, 2-Mercaptoethanol, 2-Mercaptoessigsäure, 1,2-Dimercapto-4-methylbenzol, Dinatrium-1,2-dicyanoethylendithiolat, Dimercaptomaleinsäuremonoamid, Schiffsche Basen und Hydrazone des Benzoins, polymere Komplexe, die Bis(ethylen-1,2-dithiolat)-Cu(II)- und Cu(II)-phthalocyanin-Strukturen enthalten, sowie Oxide, Hydroxide, Amide and Alkoholate der Elemente der 1. und 2. Hauptgruppe des Priodensystems nach Mendelejeff, wie $Li_2O$, NaOH, KOH, $Ca(OH)_2$, Natriummethylat, Kalium-tert.-butylat, Lithiumdiisopropylamid und Ammoniumverbindungen wei $NH_4OH$, Tetra-n-butylammoniumhydroxid, Benzyltrimethylammoniummethylat verwendet werden. Die Basen können einzeln oder in Gemisch verwendet werden.

Die erfindungsgemäße Umsetzung wird bei einer Temperatur von −80° bis 150°C, bevorzugt bei 0° bis 100°C durchgeführt.

Pro Mol Phenol der Formel III werden 1 bis 400 Mol Phenol der Formel II eingesetzt. Pro Mol Phenol der Formel II werden $1 \times 10^{-5}$ bis 1 Mol Oxidationsmittel verwendet.

Das erfindungsgemäße Verfahren kann wie folgt durchgeführt werden:

Methode 1

Das Oxidationsmittel und die Base werden im organischen Lösungsmittel vorgelet und mit Sauerstoff oder Luft in Berühung gebracht. Das Monomerengemisch der Phenole der Formel II und III wird im organischen Lösungsmittel gelöst zugegeben. Die Reaktionsmischung wird einige Minuten bis mehrere Tage bei Reaktionstemperatur belassen, gegebenenfalls unter einem Inertgas, z.B. $N_2$ oder Ar. Das bifunktionelle Polyphenylenoxid wird beispielsweise durch Ausfällen mit einem Alkohol isoliert.

Anstelle der Phenole der Formel II und III können auch die entsprechenden Metallphenolate der Elemente der 1. und 2. Hauptgruppe der Periodensystems nach Mendelejeff eingesetzt werden.

Methode 2

Das Oxidationsmittel wird entsprechend der Methode 1 vorgegeben und anstelle eines Gemisches der Monomeren Phenole der Formel II und III wird zunächst nur das Phenol der Formel II zugegeben. Nach einer Reaktionsdauer von einigen Minuten bis zu mehreren Tagen wird das Phenol der Formel III

zugegeben und wiederum einige Minuten bis mehrere Tage bei Reaktionstemperatur belassen. Die Isolierung des bifunktionellen Polyphenylenethers erfolgt entsprechend der Methode 1.

In einer anderen Ausführungsform kann das Zwischenprodukt, das bei dem ersten Reaktionsschritt entsteht, das Umsetzungsprodukt des Phenols II, isoliert werden und in einem 2. Reaktionsschritt in Gegenwart eines Oxidationsmittels zusammen mit dem Phenol der Formel III umgesetzt werden. Der bifunktionelle Polyphenylenether wird entsprechend der Methode 1 isoliert.

Methode 3

Das Gemisch der beiden Phenole II und III wird gelöst in einem organischen Lösungsmittel zu der wäßrigen Lösung einer Base gegeben. Anschließend wird unter Rühren das Reaktionsgemisch über einen Zeitraum von wenigen Minuten bis zu mehreren Stunden mit dem Oxidationsmittel versetzt. Nach einer Reaktionsdauer von wenigen Minuten bis zu mehreren Tagen wird die organische Phase abgetrennt und auf etwa ein Viertel des ursprünglichen Volumens eingeengt. Die Isolierung des Polyphenylenethers kann entsprechend Methode 1 erfolgen.

Die Analyse des Reaktionsproduktes kann auf übliche Weise erfolgen (z.B. dampfdruckosmometrische Molgewichtsbestimmung, Bestimmung der phenolischen OH-Zahl, z.B. durch Titration).

Durch das erfindungsgemäße Verfahren können sowohl symmetrische als auch unsymmetrische bifunktionelle Polyphenylenether hergestellt werden. Im Sinne der Erfindung symmetrische Produkte werden erhalten, wenn Phenole der Formel II und III eingesetzt werden die gleiche Substituenten R tragen.

Durch das erfindungsgemäße Verfahren können Polymerblöcke mit zwei funktionellen Endgruppen hergestellt werden, die eine hohe Glasübergangstemperatur besitzen. Diese Blöcke können beispielsweise mit Säurechloriden wie Phosgen, Terephthaloylchlorid, mit Diisocyanaten, mit Carbonaten und anderen Polymerblöcken zu hochmolekularen Verbindungen umgesetzt werden. Materialien, die aus diesen hochmolekularen Verbindungen hergestellt werden, zeichnen sich durch ihre gute Wärmeformbeständigkeit aus.

## Beispiele:

1. (Methode 1)

In ein offenes 50 ml Reaktionsgefäß werden 0,03 g CuCl (0,3 mMol) und 0,08g 4-Dimethylaminopyridin (0,66 mMol) in 5 ml Pyridin gegeben. Nachdem dieses Gemisch 20 Min. lang unter Rühren dem Sauerstoff der Luft ausgesetzt war, wird ein gemisch von 0,34 g 4-Brom-2,6-dimethylphenol (1,7 mMol) und 0,31 g 2,2-Bis(3,5-dimethyl-4-hydroxyphenyl)-propan (1,1 mMol) in 5 ml Pyridin bei Raumtemperatur zugegeben. Nach weiteren 5 Minuten werden 0,12 g Kalium-tert.-butylat zugegeben. Dabei erwärmt sich das Reaktionsgemisch von selbst kurzzeitig auf etwa 40°C. Nach 30 Minuten Reaktionszeit wird das Reaktionsgemisch mit 30 ml Chloroform versetzt und zweimal mit 5 ml-Portionen einer 20%igen wäßrigen EDTA*-trinatriumsalzlösung, dreimal mit 10 ml-Portionen einer 15%igen wäßrigen HCl-Lösung, jeweils zweimal mit 10 ml-Portionen eine 10%igen wäßrigen $NaHCO_3$-Lösung und destilliertem Wasser gewaschen.

Nach dem Trocknen über $MgSO_4$ wird das Lösungsmittel bei 40°C im Wasserstrahlvakuum abdestilliert. Man erhält 0,45 g Oligomere (88% der Theorie, dampfdruckosmometrische Molekulargewichtsmittel M = 720, titrierte Funktionalität an phenolischen OH-Gruppen = 2,14).

*) EDTA = Ethylendiamintetraacetat

2. (Methode 1)

In einem 100 ml Zweihalskolben mit Gaseinleitungsrohr, Rückflußkühler und Gasabgangsstück werden 0,06 g CuCl (0,61 mMol), 0,17 g 4-Dimethylaminopyridin (1,4 mMol), 2 ml Pyridin und 5 ml Chloroform gegeben.

In diese Mischung wird unter Rühren 15 Minuten lang Sauerstoff eingeleitet. Der Sauerstoffstrom wird anschließend durch Stickstoff ersetzt. Dieser Reaktionsmischung wird eine Lösung von 0,57 g 4-Brom-2,6-dimethylphenol (2,8 mMol) und 0,2 g 2,2-Bis-(3,5-dimethyl-4-hydroxyphenyl)-propan (0.7 mMol) in 10 ml Chloroform gelöst zugegeben. Das Reaktionsgefäß wird für 2,5 Stunden in einem Ölbad auf 50°C erwärmt.

Die Aufarbeitung der Reaktionslösung geschieht durch jeweils zweimaliges Ausschütteln mit je 5 ml einer 20%igen wäßrigen EDTA-trinatriumsalzlösung, einer 15%igen wäßrigen HCl-Lösung, einer 10%igen wäßrigen $NaHCO_3$-Lösung und nachfolgend mit dest. Wasser.

Nach dem Trocknen und Abdestillieren des Lösungsmittels erhält man 0,49 g Oligomere (90% der Theorie, osmometrisches Molekulargewichtsmittel = 489, titrierte Funktionalität an phenolischen OH-Gruppen von 1,59).

3. (Methode 1)

In ein offenes 100 ml Reaktionsgefäß werden 0,04 g CuCl (0,4 mMol), 0,14 g 4-Dimethylaminopyridin (1,1 mMol) und 5 ml Chlorbenzol gegeben und unter Rühren 20 Minuten dem Luftsauerstoff ausgesetzt. Dieser Lösung werden 0,32 g 2,2-Bis-(3,5-dimethyl-4-hydroxyphenyl)-propan (1,1 mMol) und 2,16 g 4-Chlor-2,6-dimethylphenol (13,8 mMol) in 20 ml Chlorbenzol zugesetzt. Nach der Zugabe von 1,4 g Kalium-tert.-butylat (12,5 mMol) wird das Reaktionsgefäß verschlossen. Nach 30 Minuten Reaktionsdauer wird die Reaktionsmischung in 100 ml Methanol, versetzt mit 2 ml konz. HCl, eingegeben. Das ausgefällte Polymere wird filtriert und mit Methanol gewaschen.

Zur Beseitigung von mitausgefallenem Kaliumchlorid wird das Polymere in Chloroform gelöst, diese Lösung filtriert und erneut mit Methanol ausgefällt.

Man erhält 0,98 g Polymeres (49% der Theorie, Molekulargewichtsmittel M = 1820, titrierte Funktionalität an phenolischen OH-Gruppen = 1,72).

4. (Methode 3)

In die Reaktionsapparatur, bestehend aus einem 1 l-Dreihalskolben, Tropftricher und Gaseinleitungsrohr wird unter Stickstoff eine Lösung von 5 g KOH in 200 ml Wasser angesetzt. Dazu gibt man eine Lösung von 0,57 g 2,2-Bis-(3,5-dimethyl-4-hydroxyphenyl)-propan und 8 g 4-Brom-2,6-dimethylphenol in 200 ml Benzol. Unter Rühren werden innerhalb von 30 Minuten 1,3 g $K_3Fe(CN)_6$ gelöst in 20 ml $H_2O$ bei Raumtemperatur zugegeben. Man beläßt das Reaktionsgemisch weitere 15 Minuten bei Raumtemperatur und trennt die organische Phase mit Hilfe eines Scheidetrichters ab. Die organische Phase wird auf 50 ml eingeengt une in ein Gemisch von 200 ml Methanol und 2,5 mol konz. HCl eingegossen. Das Polymere wird abfiltriert und mit 150 ml Methanol gewaschen. Anschließend wird das Polymere in 20—30 ml Chloroform gelöst und erneut in Methanol ausgefällt.

Das Produkt wird im Vakuum getrocknet. Ausbeute = 1,53 g (29% der Theorie, Molekulargewichtsmittel M = 2930, titrierte Funktionalität an phenolischen Hydroxylgruppen = 1,7).

**Patentansprüche**

1. Verfahren zur Herstellung von Polyphenylethern (Polyphenylenoxiden) mit zwei Hydroxylendgruppen entsprechend der Formel I

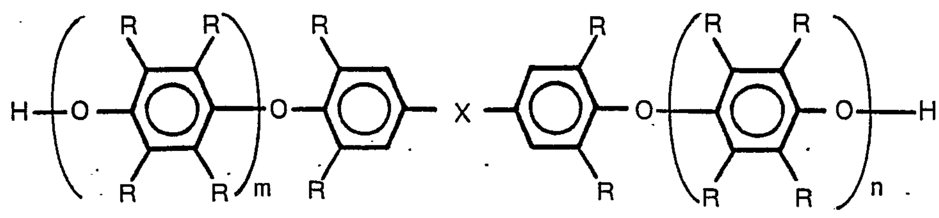

(I),

in welcher

R gleich oder verschieden ist und für Wasserstoff, einen Alkylrest mit 1 bis 4 C-Atomen, einen Alkoxyrest mit 1 bis 4 C-Atomen oder einen Arylrest mit 6 C-Atomen,

X für eine Gruppe 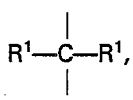,

in der $R^1$ für Wasserstoff oder einen Alkylrest mit 1 bis 4 C-Atomen, —O—, 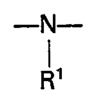 oder —$SO_2$— steht und

m und n für eine ganze Zahl von 1 bis 200 stehen,

dadurch gekennzeichnet, daß ein Gemisch der Phenole der Formeln II und III

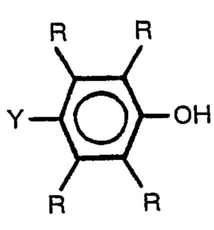

(II),

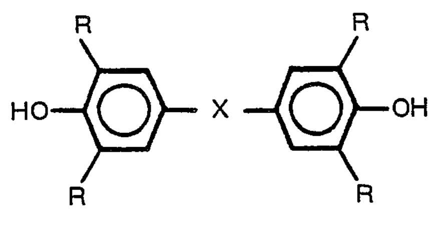

(III),

in welcher

X und R die bei Formel I angegebene Bedeutung haben und

Y für Cl, Br oder I steht, miteinander umgesetzt werden.

2. Verfahren nach Anspruch 1, dadurch gekennzeichnet, daß ein Homopolymerisat von Phenolen der Formel II mit einem Homopolymerisat von Phenolen der Formel III umgesetzt wird.

3. Verfahren nach Anspruch 1, dadurch gekennzeichnet, daß in einem organischen Lösungsmittel umgesetzt wird.

4. Verfahren nach Anspruch 1, dadurch gekennzeichnet, daß in einem Zweiphasensystem umgesetzt wird.

5. Verfahren nach Anspruch 1, dadurch gekennzeichnet, daß ein Oxidationsmittel eingesetzt wird.

6. Verfahren nach Anspruch 1, dadurch gekennzeichnet, daß eine Base verwendet wird.

**Revendications**

1. Procédé de production de polyphényléthers (polyphénylène-oxydes) portant deux groupes hydroxyle terminaux, correspondant à la formule I

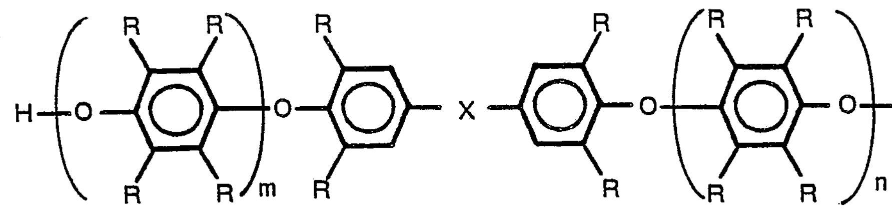

(I),

dans laquelle

R de valeurs identiques ou différentes, représente l'hydrogène, un reste alkyle ayant 1 à 4 atomes de carbone, un reste alkoxy ayant 1 à 4 atomes de carbone ou un reste aryle ayant 6 atomes de carbone,

X est un groupe 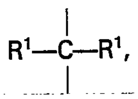, dans lequel $R^1$ est

l'hydrogène ou un reste alkyle ayant 1 à 4 atomes de carbone, —O—, 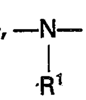 ou —$SO_2$— et

m et n représentent des nombres entiers de 1 à 200, caractérisé en ce qu'on fait réagir un mélange des phénols de formules II et III

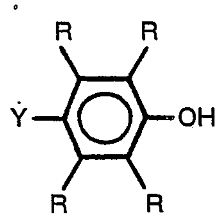

(II),

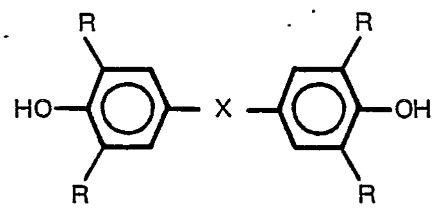

(III),

où

X et R ont la définition indiquée à propos de la formule I et Y représente Cl, Br ou I.

2. Procédé suivant la revendication 1, caractérisé en ce qu'on fait réagiur un homopolymérisat de phénols de formule II avec un homopolymérisat de phénols de formule III.

3. Procédé suivant la revendication 1, caractérisé en ce qu'on conduit la réaction dans un solvant organique.

4. Procédé suivant la revendication 1, caractérisé en ce qu'on conduit la réaction dans un système à deux phases.

5. Procédé suivant la revendication 1, caractérisé en ce qu'on utilise un agent oxydant.

6. Procédé suivant la revendication 1, caractérisé en ce qu'on utilise une base.

**Claims**

1. A process for the production of polyphenol ethers (polyphenylene oxides) containing two terminal hydroxyl groups corresponding to formula I

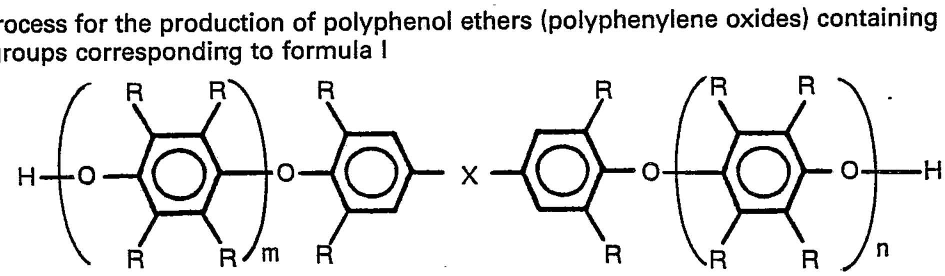

(I),

in which

the R's may be the same or different and represent hydrogen, a $C_{1-4}$ alkyl radical, a $C_{1-4}$ alkoxy radical or a $C_6$ aryl radical,

X represents a group 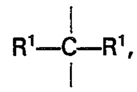,

in which $R^1$ represents hydrogen or a $C_{1-4}$ alkyl radical, —O—, 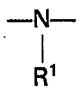 or —$SO_2$ and

m and n are integers of 1 to 200, characterized in that a mixture of phenols corresponding to formulae II and III

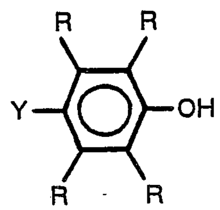 (II), 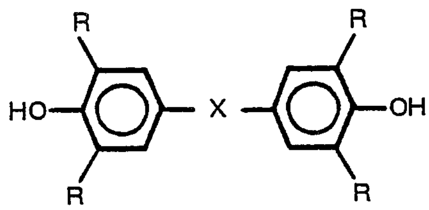 (III),

in which

X and R are as defined for formula I and

Y represents Cl, Br or I, are reacted with one another.

2. A process as claimed in claim 1, characterized in that a homopolymer of phenols corresponding to formula II is reacted with a homopolymer of phenols corresponding to formula III.

3. A process as claimed in claim 1, characterized in that the reaction is carried out in an organic solvent.

4. A process as claimed in claim 1, characterized in that the reaction is carried out in a two-phase system.

5. A process as claimed in claim 1, characterized in that an oxidizing agent is used.

6. A process as claimed in claim 1, characterized in that a base is used.